# EUROPEAN PATENT APPLICATION

(11) **EP 3 968 027 A1**
(43) Date of publication of application: **16.03.2022**
(21) Application number: 20196058.0
(22) Date of filing: 14.09.2020
(51) Int. Cl.: G01N 35/00

(54) **METHOD AND DEVICE FOR IDENTIFYING LABWARE**

(71) Applicant: Eppendorf AG, 22339 Hamburg (DE)
(72) Inventor: PETERMANN, Alexander, 22179 Hamburg (DE); HELLWEG, Lukas Wolf, 22455 Hamburg (DE)
(74) Representative: Schwarz, Claudia

(57) **Abstract**

In one aspect the invention relates to a computer implemented method for identifying a labware item (310, 320, 330, 340, 350), the labware item (310, 320, 330, 340, 350) comprising a first optical feature and a second optical feature, wherein the method comprises the steps of acquiring of a first image of the labware item with at least a first optical recording device (150), the first image displaying at least a portion of the first optical feature; acquiring a second image of the labware item (310, 320, 330, 340, 350) with at least a second optical recording device (160), the second image displaying at least a portion of the second optical feature; and identifying the first optical feature in the first image by using at least a first identification algorithm thereby obtaining first identification data, the first identification data encoding first information on the first optical feature and information indicative of whether at least a further identification is needed, wherein if, according to the information encoded in the first identification data, the at least further identification is not needed, the method further comprises the step of identifying the labware item by using at least the first information on the first optical feature, and wherein if, according to the information encoded in the first identification data, the at least further identification is needed, the method further comprises the steps of identifying the second optical feature in the second image by using at least a second identification algorithm thereby obtaining second identification data, the second identification data encoding information on the second optical feature; and identifying the labware item (310, 320, 330, 340, 350) by using at least the information on the second optical feature.

## Description

The present invention refers to a method and a device for identifying labware. In particular, the present invention refers to methods for identifying labware positioned on a work deck of an automated laboratory system (ALS) and, more particularly, of an automated pipetting system. The present invention concerns also an ALS, e.g. an automated pipetting system, configured to carry out the method of the present invention.

Automated laboratory systems are widely used in biology and chemistry labs e.g. to automatically move biological or chemical samples, to automatically run tests on such samples and/or to automatically synthetize new chemical compounds. In particular, automatic pipetting systems transfer liquids between groups of containers in a programmable, automated way.

The use of automated laboratory systems allows for increasing the reproducibility, the accuracy and the efficiency of laboratory procedures and automatic laboratory systems perform said procedures without or with minimal human intervention or supervision. In particular, this allows for minimising the safety issues arising when handling hazardous materials and the sources of human errors, which may affect laboratory activities or procedures, in particular the repetitive ones.

Automated laboratory systems may comprise detection components and carry out detection methods to detect and/or identify the samples and/or the labware positioned on their work deck. Known detection components are, for example, plate readers or high-resolution cameras and detection methods may be based on optical or computing visions techniques.

The detection and identification of samples and/or labware allows, *inter alia,* for automatically validating, selecting, and/or documenting the laboratory procedure carried out by the ALS. For instance, by using the detecting components, an ALS may identify the samples and/or the labware and their position on the work deck. The ALS may then use the information gathered during the identification to automatically validate the laboratory procedure. In particular, the ALS may assess whether the operation steps to be performed and the chronological order in which said steps have to be performed are compatible with the position of the labware on the work deck and with the laboratory procedure to be carried out. This way, the room for human errors may be further reduced.

Moreover, in some cases, a laboratory procedure may be uniquely determined by the type of sample and/or labware which are on the work decks and by their position on the deck. If this is the case, the identification and detection of the samples and/or labware allow the ALS to automatically infer the laboratory procedure to be carried out, thereby reducing the time needed to program the ALS.

In order to be used for validating, selecting, and/or documenting the laboratory procedure carried out by an ALS, the identification and/or detection of the sample and/or labware has to be sufficiently accurate. Typically, the required accuracy may be achieved by using accurate detection methods, that, typically, are relatively involved and computational costly, and/or expensive detection components, such as high-resolution polychromatic cameras.

There is thus the need for detection methods that have an increased accuracy, are less computational costly, and/or can be carried out by using cheaper detection components. At least some of these problems are solved, at least in part, by the invention of the present application, which relates to computer-implemented methods according to claim 1, to a data processing system according to claim 13, to a computer program product according to claim 14 and to a computer-readable storage medium according to claim 15. Embodiments of the invention are subject matter of the dependent claims.

In one aspect, the present invention refers to computer implemented method for identifying a labware item, the labware item comprising a first optical feature and a second optical feature. The method of the present invention comprises at least the steps of:
- acquiring of a first image of the labware item with at least a first optical recording device, the first image displaying at least a portion of the first optical feature;
- acquiring a second image of the labware item with at least a second optical recording device, the second image displaying at least a portion of the second optical feature; and
- identifying the first optical feature in the first image by using at least a first identification algorithm thereby obtaining first identification data, the first identification data encoding first information on the first optical feature and information indicative of whether at least a further identification is needed.

If, according to the information encoded in the first identification data, the at least further identification is not needed, the method further comprises the step of:
- identifying the labware item by using at least the first information on the first optical feature.

If, according to the information encoded in the first identification data, the at least further identification is needed, the method further comprises the steps of:
- identifying the second optical feature in the second image by using at least a second identification algorithm thereby obtaining second identification data, the second identification data encoding information on the second optical feature; and
- identifying the labware item by using at least the information on the second optical feature.

The step(s) of acquiring of the first and/or the second image may be performed by capturing said image by means of the first and/or the second optical recording device, respectively. Alternatively, the step(s) of acquiring of the first and/or second image may be performed by accessing a storage with an image acquired previously.

The step of identifying the first and/or the second optical feature may be carried out by obtaining the first identification data by means of the first identification algorithm and/or by obtaining the second identification data by means of the second identification algorithm, respectively. The first and/or the second identification data may be the output of the first and/or the second identification algorithm, respectively and, in particular, may be generated by carrying out the first and/or the second identification algorithm, respectively.

According to the present invention, information on an optical feature, e.g. the first and/or the second optical feature, may comprise information indicative of an estimate of the position of said feature in the corresponding image. The information on an optical feature may also comprise information indicative of the reliability of the aforementioned position estimate. According to the present invention the image corresponding to the first and the second optical feature are, respectively, the first and the second image.

For example, the information on an optical feature comprises information that indicates a region of the corresponding image, in which, with a first probability, said feature is expected to be located. If this is the case, the information on said optical feature may also comprise the value of the first probability.

The information on an optical feature may comprise information indicative of an estimate of what the optical feature is and, optionally, information indicative of the reliability of said estimate. In particular, the information on an optical feature may indicate that the optical feature is estimated to be a color, e.g. the color red, a pictogram, e.g. the biohazard symbol, and/or an alphanumeric string, e.g. the word "sterile". For example, the information on an optical feature comprises information that indicates that, with a second probability, the optical feature is estimated to be a given color, say red. If this is the case, the information on said optical feature may also comprise the value of the second probability.

In particular, the information indicative of whether at least a further identification is needed specifies whether the identification of the first optical feature by using the first identification algorithm has been inconclusive and/or insufficient for identifying the labware item. For instance, the identification of the first optical feature is inconclusive if the estimate of what the first optical feature is not deemed to be sufficiently reliable, e.g. if the probability of said estimate falls below a given threshold.

In some cases, the identification of the first optical feature may be insufficient for identifying the labware item even if the identification is sufficiently reliable. For instance, the first identification algorithm may reliably estimate that the first optical feature is the biohazard symbol. However, the presence of the biohazard symbol on the labware item may not be enough to uniquely identify the labware item, e.g. because many labware items have a biohazard symbol.

The information indicative of whether at least a further identification is needed may be encoded in a variable, such as an integer, a float, or a Boolean variable. For instance, if this variable is of Boolean type, the value "True" encodes information indicating that at least further identification is needed and the value "False" encodes information indicating that at least further identification is not needed.

The information indicative of whether at least a further identification is needed may also comprise information indicative of an estimate of what the labware item is and/or information indicative of the reliability of said estimate. For example, the information may indicate that the labware item is estimated to be a plate, a tip, a tube, or a tip box. For example, the information indicative of whether at least a further identification is needed comprises information that indicates that, with a third probability, the labware item is a tip box. If this is the case, in particular, at least further identification is needed if the third probability is below a given threshold, the threshold being, e.g., 0.6 or 0.8.

The step of identifying the labware item by using at least information on the first optical feature may be carried out by obtaining first labware identification data by means of a first labware identification algorithm. Moreover, the step of identifying the labware item by using at least information on the second optical feature may be carried out by obtaining second labware identification data by means of a second labware identification algorithm. The first and/or the second labware identification data may respectively be the output of the first and/or of the second labware identification algorithm.

The first and/or the second labware identification data may comprise, respectively, first and/or second information on the labware item. Information on the labware item may comprise information indicative of an estimate of what the labware item is and, optionally, information indicative of the reliability of said estimate. For example, the information on the labware item comprises information that indicates that, with a fourth probability, this item is estimated to be a tip box. In this case, the information on said optical feature may comprise the value of the fourth probability. Information on the labware item may further comprise information indicative of an estimate of the position of the labware item on a work deck and, optionally, information indicative of the reliability of said estimate.

The step of identifying the labware item by using at least the information on the second optical feature may be carried out together with the step of identifying the second optical feature in the second image. If this is the case, in particular, the information on the second optical feature may comprise the second information on the labware item.

According to the method of the present invention, the step of identifying the second optical feature is carried out only if the identification of the first optical feature turns out to be inconclusive or not sufficiently accurate. This way, the efficiency of the identification of the labware item is increased without indiscriminately increasing the computational cost and/or without compromising the accuracy of the labware identification, as the second optical feature is identified only if needed. The need for the identification of the second optical feature is automatically and dynamically assessed by the method in view of the output of the first identification algorithm.

In particular, the method of the present invention provides by default a relatively computationally light labware identification which is performed by using only the first identification algorithm and the first image. A more accurate (although computing costly) labware identification is provided only if the result of the first identification algorithm is inconclusive or not sufficiently accurate.

For example, the step of identifying the first optical feature by using the first identification algorithm may be less computing costly than the step of identifying the second optical feature. In particular, this may be the case because the first identification algorithm is less accurate than the second one and/or the resolution of the first image is lower than the one of the second image.

Moreover, the first and the second image are acquired independently from one another and are processed separately, so that they do not have to form a stereogram. Hence, the first and the second optical recording device do not have to be arranged with respect to one another and/or synchronized to form a stereoscopic optical recording device. This simplifies the hardware and the set-up needed to carry out the method of the present invention.

An algorithm is in particular a collection, e.g. a sequence, of instructions for processing input information to obtain output information. The instructions of an algorithm may be implemented in a computer and executed by a processor e.g. of the data processing system according to the present invention. In particular, the input information of the algorithm is encoded in input data that may be accessed by the processor carrying out the algorithm. In particular, the processor processes the input data according to the instructions of the algorithm to generate output information, which, typically, is encoded in output data. According to the present invention, in particular, an algorithm processes data when the algorithm comprises instructions, which, when executed by a processor, cause said processor to process these data.

An image may be a vector image or a two-dimensional grid of pixels, e.g. a rectangular grid of pixels. In particular, the location of a pixel in an image may be univocally determined in terms of its two-dimensional image coordinate in the image, said coordinates representing the location of said pixel in the two-dimensional grid of pixels.

An image, e.g. the first and/or the second image, may be encoded by at least a bitmap. A bitmap encoding an image or a portion thereof may comprise, e.g. consist of, an array of bits that specifies intensity, i.e. the color, of each pixel of said image or a portion thereof. The bitmap may be palette-indexed so that the entries of the array are indexes onto a color table. The entries of the array may store the bits encoding the color of the pixel. A bitmap may comprise, e.g. consist of, a dot matrix data structure representing the two-dimensional grid of pixels. The bitmap may further comprise information concerning the number of bits per pixel, the number of pixels per row of the two-dimensional grid and/or the number of pixels per column of said grid. An image viewer may use the information encoded in the bitmap to render the image on the screen of a computing device.

In an embodiment of the present invention, the first image comprises a first array of pixels, each pixel of the first array of pixels having a respective position in the array and a respective intensity value. In this embodiment, the first identification algorithm processes first input data, the first input data comprising the position and the intensity value of each pixel of the first array of pixels.

In particular, the second algorithm processes second input data. Moreover, in this case, the second input data may encode the first information on the first optical feature.

The second image may comprise a second array of pixels, each pixel of this array of pixels having a respective position in the array and a respective intensity value. In this case, the second input data may comprise the position and the intensity value of each pixel of the second array of pixels.

The intensity, e.g. the color, of a pixel may be expressed in terms of the RGB color model, the CMY color model or the CMYK color model. In particular, in the RGB color model, the intensity of a pixels may be determined by means of three integer values, each value ranging from 0 to 255. Alternatively, or in conjunction with the above, in the RGB model, the intensity of a pixels may be expressed by using the hue, saturation, value (HSV) representation or the hue, saturation, lightness (HSL) representation.

In particular, in a greyscale image, the intensity of a pixel may be expressed in terms of a single integer value and, in particular said value may range from 0 to a maximum value. For example, said maximum value may be equal to 256 or 65,536. Moreover, in a binary image, the intensity of the intensity of a pixel may be expressed in terms of a single integer value which may assume either a first intensity value, e.g. the value "0", or a second intensity value, e.g. the value "1".

The first identification algorithm and the second identification algorithm may be equal to one another. In this case, in particular, the output of the first identification algorithm is different from the output of the second identification algorithm, because the first input data are different from the second input data. For example, the first input data comprise the position and the intensity value of each pixel of the first array of pixels, information indicative of the position of the first camera with respect to the work deck, information indicative of the resolution of the first image, and/or information indicative of whether the first camera is a polychrome camera. The second input data, instead, may comprise the position and the intensity value of each pixel of the second array of pixels, information indicative of the position of the second camera with respect to the work deck, information indicative of the resolution of the second image, and/or information indicative of whether the second camera is a monochrome camera.

An embodiment of the method of the present invention comprises the step of:
- determining a first region of interest (ROI) in the first image by using first position information about the position of the labware with respect to a work deck.

Moreover, in this embodiment, the step of identifying the first optical feature in the first image by using the first identification algorithm is carried out by using the first region of interest.

Alternatively, or in conjunction with the above, the method may comprise the step of:
- determining a second ROI in the second image by using second position information on the position of the labware with respect to the work deck,
and the step of identifying the second optical feature in the second image by using the second identification algorithm is carried out by using the second ROI.

In particular, the work deck may be comprised in the ALS according to the present invention. For instance, the work deck may be divided into a plurality of deck regions, e.g. four deck regions. The first and/or the second position information may comprise information about the location of the deck region, in which the labware item is positioned or expected to be positioned.

The step of determining the first ROI and/or the second ROI may be carried out by using a first and/or a second ROI determining algorithm, respectively. For example, the first and/or the second ROI determining algorithm process first and/or second position data, respectively. In particular, the first and/or the second position data encode, respectively, the first and/or second position information about the position of the labware with respect to the work deck. For instance, the output of the first ROI determining algorithm and/or the output of the second ROI determining algorithm may comprise, respectively, information on the location of the first ROI in the first image and/or of the second ROI in the second image.

The first and/or the second ROI may comprise or consists of the first and/or the second array of pixel, respectively. Moreover, the first and/or the second ROI may display at least a portion of the deck region, in which the labware item is positioned or expected to be positioned. The information on the location of a ROI in an image may specify the location of some of the pixels comprised in the ROI, insofar that said information is sufficient to correctly obtain the location of each of the pixels of the ROI. For example, if the ROI is a rectangular region of the image, the information about the location of the vertices of said region is sufficient to obtain the location of each of the pixels of the ROI.

The information on the location of the first ROI in the first image may be comprised in the first input data, so that the step of identifying the first optical feature in the first image by using the first identification algorithm is carried out by using the first ROI. Alternatively, or in conjunction with the above, the information on the location of the second ROI in the second image may be comprised in the second input data, so that the step of identifying the second optical feature in the second image is carried out by using the second ROI.

In particular, at least an instruction and/or the execution order of some of the instructions of the first identification algorithm depends on the location of the first ROI in the first image, so that the step of identifying the first optical feature by using the first identification algorithm is carried out by using the first ROI. For instance, at least an instruction and/or the execution order of some of the instructions of the second identification algorithm depends on the location of the second ROI in the second image, so that the step of identifying the second optical feature by using the second identification algorithm is carried out by using the second ROI.

The detection of a ROI by using the position of the labware item with respect to the work deck and the use of said ROI to identify an optical feature act synergistically to increase the accuracy of the identification of the optical feature. In particular, this appear to be the case because labware items may occupy a finite number of pre-established positions with respect to the work deck. This way, the identification algorithm identifying the optical feature may be efficaciously optimized for each of these pre-established positions.

The method of the present invention may further comprise the step of:
- acquiring third position information on the position of the labware with respect to the work deck by using at least a position determining algorithm.

In this case, the first identification algorithm may process first input data, the first input data depending on the third position information. In particular, the first input data further comprise the third position information, so that the first input data depend on said information.

The position determining algorithm may process position determining input data. In particular, the position determining input data may comprise the first and/or the second array of pixels. The position determining input data may comprise the information on the location of the first ROI in the first image and/or the information on the location of the second ROI in the second image. For example, the position determining input data comprise the first and/or the second position information.

The step of acquiring third position information may comprise determining whether the first and/or the second image displays a height adapter. If this is the case, the step of acquiring third position information may comprise determining the position of the height adapter in the first and/or second image. Alternatively, or in conjunction with the above, the step of acquiring third position information may comprise determining the height of the height adapter. For instance, the determination of this height depends on the location of the height adapter in the first and/or second picture. The information indicative of the location and the height of the height adapter are ultimately information on the location of the labware item arranged on said adapter and/or on the height of the labware item with respect to the surface of the work deck.

The information about the presence, the location and/or the height of a height adapter increase the accuracy of the identification of the labware item arranged on said adapter. For instance, the presence and the height of the height adapter restrict the number of the possible outcomes of the labware identification. In particular, information indicative of the location and the height of the height adapter indicates that the labware item arranged thereon cannot be any labware item that cannot be arranged on the detected height adapter. Moreover, the information about the presence and the height of the height adapter allows for a better estimate of the distance between the first and/or second camera and the labware item. This leads to a more accurate identification of the optical features and, in turn, of the labware item.

The information on the location of the first ROI in the first image may be comprised in the first input data, so that the step of identifying the first optical feature in the first image by using the first identification algorithm is carried out by using the first ROI. Alternatively, or in conjunction with the above, the information on the location of the second ROI in the second image may be comprised in the second input data, so that the step of identifying the second optical feature in the second image by using the second identification algorithm is carried out by using the second ROI.

An embodiment of the method of the present invention comprises the step of:
- selecting the first identification algorithm among a first pool of identification algorithms.

In this case, the step of selecting the first identification algorithm may depend at least on the third position information. Moreover, the step of selecting the first identification algorithm may further depend on the location of the first ROI in the first image and/or on the first position information.

In this embodiment, the third position information allows for dynamically selecting the identification algorithm that, given the location of the labware item with respect to the work deck, is most suitable for identifying said item. The accuracy of the labware identification is thus increased.

In one embodiment of the invention, if, according to the information encoded in the first identification data, at least a further identification is needed, the method further comprises the step of:
- selecting the second identification algorithm among a second pool of identification algorithms.

Moreover, in this embodiment, the step of selecting the second identification algorithm depends at least on the information encoded in the first identification data. The step of selecting the second identification algorithm may further depend on the location of the second ROI in the second image and/or on the second position information.

Typically, the first identification data comprise an at least partial information on the first optical feature and, hence, on the labware item. In this embodiment, said information is used for dynamically selecting the identification algorithm that, given the information obtained by the first algorithm, is the most suitable for identifying the second optical feature and, hence the labware item. The accuracy of the labware identification is hence increased.

According to an embodiment of the method, the first and/or the second identification algorithm comprise at least a first and/or a second machine learning algorithm, respectively.

In particular, a machine learning algorithm comprises instructions for processing input information to obtain output information and at least some of these instructions are set by using a set of training data and a training algorithm. The first and/or the second machine learning algorithm may comprise an Artificial Neural Network (ANN), a decision tree, a random forest, a support vector machine (SVM), or the like. For example, the first and/or the second machine learning algorithm may be a convolutional neural network and/or a deep neural network, such as AlexNet.

In particular, an ANN is an algorithm that maps an ANN input into an ANN output and that comprises a plurality of interconnected nodes, each node mapping an input into an output by means of an activation function, which may be node dependent. In particular, the activation function of a node may depend on a bias and on one or more weights weighting the data items of the input of said node. The values of the weights of the ANN may be obtained by training the ANN by means of at least a training set and a training algorithm. According to an exemplary training algorithm, the values of the weights are iteratively adjusted so as to minimize the value of a cost function which, typically, depends on the weights of the ANN, the ANN inputs, the ANN outputs, and/or the biases.

In particular, the first and/or the second machine learning algorithm is a classifier. For instance, the first and/or the second machine learning algorithm are a first and/or a second binary classifier, respectively. For example, the first and/or second binary classifier may carry out a binary classification to assess, respectively, whether the first and/or second optical feature are identified as a specific optical feature (e.g. the biohazard symbol and/or the color red). In this case, the first and/or second identification data may specify, respectively, whether the first and/or second optical feature are identified as the specific optical feature.

Alternatively, or in conjunction with the above, the first and/or the second machine learning algorithm may carry out a multiclass classification to assess, respectively, whether the first and/or second image displays a specific optical feature among a pool of specific optical features. For instance, the pool of specific optical features may comprise a specific pictogram, e.g. the biohazard symbol, a specific alphanumeric string, e.g. the word "sterile", a specific color, e.g. the color "red", and the like.

The first and/or the second machine learning algorithm may be a confidence-weighted classifier. In particular, the first and/or the second machine learning algorithm carry out a probabilistic classification. For example, if the first machine learning algorithm is a confidence-weighted classifier, the first identification data specify a list of specific optical features and, for each specific optical feature in this list, the respective probability of the first optical feature being said specific optical feature. If the second machine learning algorithm is a confidence-weighted classifier, the second identification data may specify a list of specific optical features and, for each specific optical feature in this list, the respective probability of the second optical feature being said specific optical feature.

For instance, the first machine learning algorithm checks whether the first optical feature is displayed in the first image, provides an estimate of the location of said feature in the first image and identifies said feature. The second machine learning algorithm may check whether the second optical feature is displayed in the second image and provide an estimate of the location of said feature in the second image.

For example, the first and/or the second machine learning algorithm are a feed forward convolutional ANN comprising a number of layers and a number of parameters, the parameters of the ANN being the weights and the biases thereof. The number of layers may be comprised between 4 and 18, in particular between 5 and 17 and, more particularly, between 6 and 16. The number of parameters may be comprised between 10,000 and 1,000,000, in particular, between 15,000 and 900,000 and, more particularly, between 20,000 and 800,000.

The first labware identification algorithm and/or the second labware identification algorithm may respectively comprise a third and/or a fourth machine learning algorithm. In particular, the third and/or the fourth machine learning algorithm may be classifier, e.g. a binary and/or a confidence-weighted classifier. The third and/or the fourth machine learning algorithm may be an ANN, a decision tree, a random forest, a SVM, a Bayesian network or the like.

For example, the third and/or fourth machine learning algorithm may respectively be a first and/or second decision tree that process input data to "decide", e.g. provide an estimate, of what the labware item is. In particular, the input data of the first and/or second decision tree may comprise the first information on the first optical feature e.g. as obtained by using the first identification algorithm. The input data of the second decision tree may further comprise the second information on the second optical feature e.g. as obtained by using the second identification algorithm.

It is generally known that object detection and recognition is typically a challenging task for machine learning algorithms. In general, only some machine learning algorithms comprising convolutional neural networks with a relative large number of layers and parameters may carry out this task and deliver accurate results. These algorithms, however, require an extensive training that discourage their use in ALSs. Surprisingly, however, machine learning algorithms can identify labware items on a work deck of an ALS, and the optical feature thereof, with a sufficiently high accuracy and without the need of extensive training procedures and/or large training data sets. However, with the limited ROI according to the suggestion described herein it is possible to reduce the required complexity of ANN models, reduce their parameter count, training time and data set requirements.

According to an embodiment of the present invention, the first machine learning algorithm carries out a multiclass classification by using the first ROI to assess whether the first image displays a specific optical feature among a first pool of specific optical features. In this case, the step of selecting the first ROI in the first image is carried out by using information about at least an optical feature of the first pool of specific optical features and/or information indicative of the position of said element on the labware items, that comprise said element. In particular, the step of selecting the first ROI in the first image may be carried out by using information about each element of a plurality of optical features of the first pool of specific optical features and/or information indicative of the position said each element on the labware items, that comprise said each optical feature. In this case, the first ROI may substantially correspond to the region of the first image in which the elements of the first pool of specific optical features have the highest variance with respect to one other. Hence, the complexity of the first machine learning algorithm (e.g. the number of parameters), its training time, and/or the size of the training data set may be reduced, whilst attaining a sufficiently high classification accuracy.

In a further embodiment of the method of the present invention, the second machine learning algorithm carries out a multiclass classification by using the second ROI to assess whether the second image displays a specific optical feature among a second pool of specific optical features. In this case, the step of selecting the second ROI in the second image is carried out by using information about each element of a plurality of optical features of the second pool of specific optical features and/or information indicative of the position said each element on the labware items, that comprise said element. In this case, the second ROI may substantially correspond to the region of the second image in which the elements of the second pool of specific optical features have the highest variance with respect to one other. Hence, the complexity of the second machine learning algorithm (e.g. the number of parameters), its training time, and/or the size of the training data set may be reduced, whilst attaining a sufficiently high classification accuracy. In particular, the first optical recording device is a first camera. The first identification algorithm may depend at least on a first set of intrinsic calibration parameters associated to the first camera, and/or at least on a first set of extrinsic calibration parameters associated to the first camera.

For instance, the first input data may depend, e.g. comprise, the elements of the first set of intrinsic calibration parameters and/or the elements of the first set of extrinsic calibration parameters, so that the first identification algorithm depends, respectively, on the elements of the first set of intrinsic calibration parameters and/or on the elements of the first set of extrinsic calibration parameters. In particular, the first set of extrinsic calibration parameters and/or the first set of intrinsic calibration parameters consist, respectively, of one or more extrinsic calibration parameters and/or of one or more intrinsic calibration parameters associated to the first camera.

Alternatively, or in conjunction with the above, the second optical recording device is a second camera. The second identification algorithm may depend at least on a second set of intrinsic calibration parameters associated to the second camera and/or at least on a second set of extrinsic calibration parameters associated to the second camera.

For instance, the second input data may depend, e.g. comprise, the elements of the second set of intrinsic calibration parameters and/or the elements of the second set of extrinsic calibration parameters, so that the second identification algorithm depends, respectively, on the elements of the second set of intrinsic calibration parameters and/or on the elements of the second set of extrinsic calibration parameters. In particular, the second set of extrinsic calibration parameters, and/or the second set of intrinsic calibration parameters consist, respectively, of one or more extrinsic calibration parameters and/or one or more intrinsic calibration parameters associated to the second camera.

In particular, extrinsic calibration parameters associated with a camera describe the position and/or the orientation of said camera with respect to a world frame and according to a camera model (such as the pinhole camera model). The first and/or the second set of extrinsic parameters may comprise extrinsic calibration parameters that are suitable to describe the transformation from a three-dimensional world coordinate system to the three-dimensional coordinate system of the first and/or the second camera, respectively. In particular, the first and/or the second set of extrinsic parameters may comprise parameters suitable to determine the entries of a three-dimensional rotation matrix and the coordinates of a three-dimensional translation vector. The first and/or the second set of extrinsic parameters may be obtained by using an extrinsic calibration method to calibrate the first and/or the second camera, respectively.

In particular, intrinsic calibration parameters associated with a camera may describe the intrinsic characteristics of said camera and may be obtained by using an intrinsic calibration method to calibrate said camera. The first set of intrinsic parameters may comprise intrinsic calibration parameters that are suitable to describe a projective transformation from the three-dimensional coordinate system of the first camera into the two-dimensional coordinates of the first image. For example, the first set of intrinsic calibration parameters comprise the focal length, the scale factors, the skew factor, the principal point coordinates, the radial distortion coefficients, and/or the tangential distortion coefficients of the first camera.

The second set of intrinsic parameters may comprise intrinsic calibration parameters that are suitable to describe a projective transformation from the three-dimensional coordinate system of the second camera into the two-dimensional coordinates of the second image. The second set of intrinsic calibration parameters may comprise the focal length, the scale factors, the skew factor, the principal point coordinates, the radial distortion coefficients and/or the tangential distortion coefficients of the second camera.

The extrinsic parameters of the first set of extrinsic calibration parameters and/or the intrinsic parameters of the first set of intrinsic calibration parameters may be used by the first identification algorithm to process the first image thereby increasing the quality of the first input data. For example, said parameters may be used to adjust the first image for the intrinsic characteristics of the first camera and/or to align the deck work and/or the labware item displayed in the first image. Alternatively, or in conjunction with the above, the aforementioned parameters may be used by the first algorithm to acquire information about the geometric features of the scene depicted in the first image. For instance, the extrinsic and/or intrinsic parameters may be used to estimate the size of objects in the first image and/or to determine the location of the first camera with respect to the deck work or the labware item. This way, the accuracy of the identification of the first optical feature is increased.

Likewise, the extrinsic parameters of the second set of extrinsic calibration parameters and/or the intrinsic parameters of the second set of intrinsic calibration parameters may be used by the second identification algorithm to increase the accuracy of the identification of the second optical feature. In particular, the second identification algorithm uses said parameters to process the second image and thus increase the quality of the second input data. Moreover, the aforementioned parameters may be used to acquire information about the geometric features of the scene depicted in the second image.

Alternatively, or in conjunction with the above, the first ROI determining algorithm may depend at least on the first set of intrinsic calibration parameters associated to the first camera and/or at least on the first set of extrinsic calibration parameters associated to the first camera. The second ROI determining algorithm may depend at least on the second set of intrinsic calibration parameters associated to the second camera and/or at least on the second set of extrinsic calibration parameters associated to the second camera.

For the same reasons described above, the extrinsic parameters of the first set of extrinsic calibration parameters and/or the intrinsic parameters of the first set of intrinsic calibration parameters may be used by the first ROI determining algorithm to increase the accuracy of the identification of the first ROI. Moreover, the extrinsic parameters of the second set of extrinsic calibration parameters and/or the intrinsic parameters of the second set of intrinsic calibration parameters may be used by the second ROI determining algorithm to increase the accuracy of the identification of the second ROI.

According to a further embodiment of the method of the present invention, the first identification algorithm and/or the second identification algorithm depend on a first estimate of the shape of the labware item and/or on a second estimate of the shape of the labware item, respectively. In particular, the first and/or the second input data comprises information indicative of the first and/or second estimate of the shape of the labware item, respectively.

The first and/or second estimate of the shape of the labware item may be a model describing the generic shape of a class of labware items. For instance, the shape of both a 96 polymerase chain reaction (PCR) plate and a 96 microtitration (MTP) plate may be modelled by 96 small circles uniformly distributed inside a rectangle.

The second identification algorithm may depend on the second estimate of the shape of the labware item and said estimate may be obtained by using the first identification data obtained by means of the first identification algorithm. For example, if the first information on the first optical feature specifies that the first optical feature is a given texture pattern, and if said pattern is present only on the surface of PCR plates and 96 MTP plates, the second input data may comprise information specifying that the shape of the labware item is estimated to be modelled by 96 small circles uniformly distributed inside a rectangle.

The estimates of the shape of the labware item may be used by the first and/or second identification algorithm to detect and identify more easily the respective optical features, thereby increasing the identification accuracy of said feature. The accuracy is further increased if said estimates are used together with the extrinsic and/or the intrinsic calibration parameters.

Alternatively, or in conjunction with the above, the first and/or the second identification algorithm may depend on an estimate of the shape of the first and/or second optical feature, respectively.

In an embodiment of the present invention, the second identification data encodes information indicative of whether at least a further identification is needed.

In this embodiment, if, according to the information encoded in the second identification data, at least a further identification is needed, the method further comprises the step of:
- identifying the first optical feature in the first image by using at least a third identification algorithm thereby obtaining third identification data, the third identification data encoding second information on the first optical feature.

If, according to the information encoded in the second identification data, at least a further identification is needed, the step of identifying the labware item by using at least the information on the second optical feature may be performed by using the second information on the first optical feature.

The step of identifying the first optical feature by using the third identification algorithm may be carried out by obtaining the third identification data by means of the third identification algorithm. The third identification data may be the output of the third identification algorithm and, in particular, may be generated by carrying out said algorithm. For instance, the information indicative of whether at least a further identification is needed specifies whether the identification of the second optical feature is inconclusive and/or insufficient for identifying the labware item.

According to this embodiment, the step of identifying the first optical feature by using the third identification algorithm is carried out only if the identification of the second optical feature turns out to be inconclusive or not sufficiently accurate. This way, the efficiency of the identification of the labware item is increased without indiscriminately increasing the computational cost and/or without compromising the accuracy of the labware identification, as the first optical feature is identified twice only if needed. The need for the second identification of the first optical feature is automatically and dynamically assessed by the method in view of the output of the second identification algorithm. The accuracy of the labware item identification is further increased by the fact that said identification is carried out by using both information about the first optical feature and information about the second one.

According to the present invention, the third algorithm may process third input data. In particular the third input data encodes the first information on the first optical feature and/or the information on the second optical feature. In this embodiment, the identification of the labware item relies on both the information about the first optical feature and the information about the second optical feature and, hence is more accurate.

In an embodiment of the present invention, if, according to the information encoded in the second identification data, at least a further identification is needed, the method further comprises the step of:
- selecting the third identification algorithm among a third pool of identification algorithms,
wherein the step of selecting the second identification algorithm depends at least on the information encoded in the first identification data and/or the information encoded in the second identification data.

The steps of selecting the first, second and/or third identification algorithms among the first, second, and/or third pool, respectively, may be carried out by using a selecting algorithm. In particular, the selecting algorithm may process the first, second and/or third position information to select the first algorithm. Further, the selecting algorithm may process the information encoded in the first identification data and/or information on the first algorithm to select the first identification algorithm. Furthermore, the selecting algorithm may process the information encoded in the first identification data, in the second identification data, the information on the first identification algorithm and/or information on the second identification algorithm to select the second identification algorithm.

Besides the aforementioned steps of identifying the first optical feature and the second optical feature, the method of the present invention may further comprise a further step or a plurality of further steps. The further step may be the step of identifying a corresponding optical feature in the first and/or second image by using at least an identification algorithm. The corresponding optical feature may be the first feature, the second feature or another feature, different from the first and the second one. The identification algorithm used in the further step generates identification output data, which comprise information indicative on whether further identification is needed, e.g. because, the identification carried out during the further identification step is inconclusive or insufficient to identify the labware item.

For example, in one embodiment of the method, the further step is carried before the step of the identifying the first optical feature by using at least the first identification algorithm and does not lead to a conclusive identification of the corresponding optical feature. For instance, the further step may be carried out after the step of the identifying the first optical feature by using at least the first identification algorithm and before the step of the identifying the second optical feature by using at least the second identification algorithm. In this case, the step of the identifying the second optical feature is carried out because both the step of identifying the first optical feature by using at least the first identification algorithm and the further step do not lead to conclusive identifications.

In an embodiment of the method of the present invention if, according to the information encoded in the second identification data, at least a further identification is needed, the step of identifying the labware item by using at least the information on the second optical feature is performed by using the first information on the first optical feature. In this embodiment, the identification of the labware item relies on the information about the first optical feature and the information about the second optical feature and, hence, is more accurate.

According to an embodiment of the present invention, if, according to the information encoded in the first identification data, the at least further identification is not needed, the method further comprises the step of:
- generating a virtual representation of a work deck by using at least the first information on the labware item.

Alternatively, or in conjunction with the above, if, according to the information encoded in the first identification data, the at least further identification is needed, the method may further comprise the step of:
- generating a virtual representation of a work deck by using at least the second information on the labware item.

The virtual representation of the work deck may be stored and provide an automatically generated documentation of the laboratory procedure carried out by the ALS, that comprises the work deck. Alternatively, or in conjunction with the above, the virtual representation may be used to automatically validate and, if needed, correct the laboratory procedure. Moreover, by using the virtual representation, the ALS may automatically infer the procedure to be carried out.

The first and/or the second optical recording device may comprise or consists of a polychrome camera, a monochrome camera, a greyscale camera, a black-white camera, an UV camera, an IR camera, a video camera, a one-dimensional camera sensor and/or a three-dimensional RGBD camera.

In an embodiment of the present invention, the second optical recording device is a polychrome camera and/or the first optical recording device is a monochrome camera, and/or a greyscale camera. In particular, the first optical recording device and/or second optical recording device are a digital camera having a first and/or a second pixel resolution, respectively. The first pixel resolution may be lower than or equal to 921,600 pixels and, in particular, lower than or equal to 414,720 pixels. Moreover, the fist and/or the second pixel resolution may be lower than or equal to 2,157,840 pixels and, in particular, lower than or equal to 2,073,600 pixels

This embodiment allows for using at least a low-resolution camera which, typically is cheaper than a high-resolution one, whilst meeting the accuracy requirements for the identification of the second optical feature. In particular, in this case, the use of the information about the first optical feature in the identification of the second optical feature compensates for the low resolution of the second image.

In one embodiment of the method of the present invention, the step of acquiring the first image is performed at a first time instant which is characterized by a first system time value. The step of acquiring the second image is performed at a second time instant, the second time instant being characterized by a second system time value of the system time. The first time system value and the second time system value fulfil a predetermined relation.

This embodiment of the method may be carried out even if the first and/or the second optical recording device are movable with respect to one another and/or with respect to the work deck. This may be required if, for instance, the work deck is larger than the field of view of the first and/or the second optical recording device. In this case, the predetermined relation may depend on the trajectories described by the first and/or the second optical recording device in such a way that at the first time instant and at the second time instant the labware item is in the field of view of the first and the second optical recording device, respectively.

In particular, the first time system value and the second time system value are equal to one another.

This embodiment of the method may be carried out even if the labware items positioned on the work deck change over time. If this is the case, the requirement that the first time system value is equal to the second time system value guarantees that the first and the second optical recording device acquire an image of the same scene so that both display the labware item.

In particular, the system time is the system time of the computer implementing the method of the present invention, e.g. the data processing system of the present invention. The system time may be measured by a system clock of said computer.

In particular, a labware item comprises or consists of a container for use in a clinical or laboratory environment. This container may be made of glass, plastic, metal, and the like. For example, a labware item may comprise or consists of a culture dish which may comprise, a top, a lid and/or bottom. Moreover, a labware item comprises or consists of a sample vial and/or a test tube. A labware item may be for single use, for multiuse and/or disposable.

Moreover, according to the present invention, the labware item may comprise or consist of a plate, a tip, a tube, a reservoir, a tip box, a height adapter, a reservoir rack and/or a tube rack.

According to the present invention, the first optical feature and/or the second optical feature may comprise an indicium, an ideogram, a pictogram, a set of alphanumeric characters, a texture pattern, a hole pattern, a protrusion patterns, a barcode, and/or a color.

For example, the first optical feature may comprise or consist of a set of alphanumeric characters and/or a hole pattern, and the second optical feature may be a color, e.g. the color of a portion or of the labware item. In particular, the hole pattern may be C-, H-, I-, L-, O-, T-, U-, or V-shaped.

The information on the first optical feature may convey information about a class to which the labware item belongs. In this case, the information on the first optical feature may, together with the information on the second optical feature, convey information indicative of what member of the class the labware item is.

In an embodiment of the present invention if, according to the information encoded in the first identification data, at least a further identification is needed, the step of identifying the labware item by using at least the information on the second optical feature is performed by using the first information on the first optical feature. In this embodiment, the identification of the labware item relies on the information about the first optical feature and the information about the second optical feature and, hence is more accurate.

For instance, if the first optical feature is the biohazard symbol, said feature may convey the information that the labware item is a tube belonging to the class of tubes comprising biohazard materials. Moreover, if the second optical feature is the color red, the first and the second optical feature convey the information that the labware item is specific member of the class, i.e. a tube comprising a specific biohazardous material, e.g. chloroform.

The order, according to which the steps of the method of the present invention are described in the present specification, does not necessarily reflect the chronological order, according to which said steps are carried out.

The present invention refers to a data processing system comprising a first optical recording device, a second optical recording device, and processing means configured to perform the method according to the present invention.

The present invention refers also to an automated laboratory system comprising the data processing system of the present invention. In particular, the ALS of the present invention comprise a first optical recording device, a second optical recording device, processing means configured to perform the method of the present invention, and a work deck for positioning a labware item. For example, the ALS is an automated pipetting system. In particular, the work deck of the ALS bears the labware item.

The present invention refers also to a computer program product comprising instructions which, when the program is executed by a system according to the present invention, cause said system to carry out the method of the present invention.

The invention concerns a computer-readable storage medium comprising instructions which, when executed by a system according to the present invention, cause said system to carry out the method of the present invention.

Exemplary embodiments of the invention are described in the following with respect to the attached figures. The figures and corresponding detailed description serve merely to provide a better understanding of the invention and do not constitute a limitation whatsoever of the scope of the invention as defined in the claims. In particular:
- **Fig. 1**: is a schematic representation of an embodiment of the data processing system according to the present invention;
- **Fig. 2**: is a flow diagram of the operation of a first embodiment of the method of the present invention;
- **Fig. 3a, 3c**: are schematic representations of the first image acquired by using the embodiment of the data processing system according to the present invention;
- **Fig. 3b, 3d**: are schematic representations of the second image acquired by using the embodiment of the data processing system according to the present invention; and
- **Fig. 4**: is a flow diagram of the operation of a second embodiment of the method of the present invention.

### Detailed Description of Embodiments

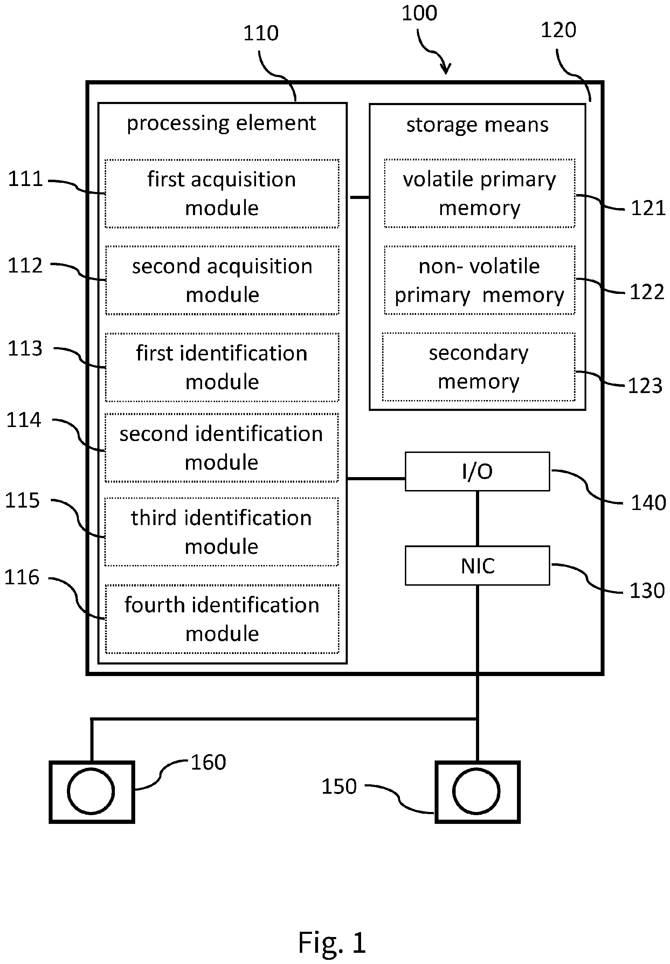

**Fig. 1** is a schematic view of a first embodiment of the data processing system (DPS) 100 according to the present invention. Said data processing system 100 may comprise a computing device or a cluster thereof. The data processing system 100 comprises a processing element 110 and storage means 120, which are in data communication with one another. The processing element 110 may consist of or comprise a CPU and/or a GPU and comprises several modules 111-116 configured to perform the steps of the method of the present invention.

The storage means 120 may comprise volatile primary memory 121 (e.g. a RAM, a DRAM, a SRAM, a CPU cache memory or the like) and/or non-volatile primary memory 122 (e.g. a ROM, a PROM, an EPROM or the like). In particular, the volatile primary memory may consist of a RAM. For instance, the volatile primary memory 121 temporarily holds program files for execution by the processing element and related data and the non-volatile primary memory 122 may contain bootstrap code for the operating system of the DPS 100.

The storage means 120 may further comprise a secondary memory 123, which may store the operating system and/or the instructions of the algorithms used to carry out the method of the present invention. Moreover, the secondary memory 123 may store a computer program product comprising instructions which, when the computer program product is executed by the DPS 100, cause the DPS 100 to carry out the method according to the present invention.

The secondary memory 123, the primary memories 121, 122, and the processing element 110 need not be physically housed within the same housing and may instead be spatially separated from one another. In particular, the secondary memory 123, the primary memories 121, 122, and the processing element 110 may be spatially separated from one another and may exchange data with one another via wired and/or wireless media (not shown).

The DPS 100 may comprise an input/output (I/O) interface 140 which allows the DPS 100 to communicate with input/output devices (e.g. displays, keyboards, touchscreens, printers, mice, cameras, or the like). The DPS 100 may further comprise a network interface controller (NIC) 130 configured to connect the DPS 100 with a suitable network (not shown). According to the present invention, a suitable network may for instance be an intranet, the internet or a cellular network.

The data processing system 100 comprises a first optical recording device and the second optical recording device in the form of a first digital camera 150 and a second digital camera 160, respectively. In particular, the first camera 150 and the second camera 160 are a greyscale and a polychrome camera, respectively. The first camera 150 and the second camera 160 are configured to acquire the first image and the second image, respectively, and may be a photo camera and/or a video camera. As shown in **fig. 1****,** the first camera 150 and/or the second camera 160 may be connected to the processing element 110 via the I/O interface 140. For example, the first camera 150 and/or the second camera 160 may be connected wirelessly to the I/O interface via the NIC 130. The first camera 150 and/or the second camera 160 may be intelligent devices with their own memory for storing associated instructions and data for use with the I/O interface 140 or peripheral devices.

The processing element 110 comprises several modules 111 to 116 configured to carry out the method of the present invention. In particular, the first acquisition module 111 is configured to operate the first camera 150 to acquire the first image. The second acquisition module 112 is configured to operate the second camera 160 to acquire the second image. The processing element 110 comprises a first identification module 113 configured to identify the first optical feature in the first image by using the first identification algorithm. The second identification module 114 is configured to identify the labware item by using the first information on the first optical feature. The processing element 110 further comprise a third identification module 115 configured to identify the second optical feature in the second image by using at least a second identification algorithm. The fourth identification module 116 is configured to identify the labware item by using the information on the second optical feature. The first identification module 113 and the third identification module 115 may be the same module. In particular, the second identification module 114 and the fourth identification module 116 may be the same module. The processing element 110 may further comprise an evaluation module (not shown) configured to establish whether, according to the information encoded in the first identification data, a further identification is needed.

For example, the DPS 100 may be a computer system including the first camera 150 and the second camera 160 and, more particularly, may be a smartphone, a desktop computer, a tablet, a laptop or the like. Moreover, the DPS 100 may be the ALS according to the present invention, in particular an automatic pipetting system. In this case, the DPS 100 comprises a work deck (not shown) for positioning one or more labware items and/or a pipetting head (not shown) for liquid transfer. The pipetting head may be movable with respect to the work deck by means of servo and/or stepper motors.

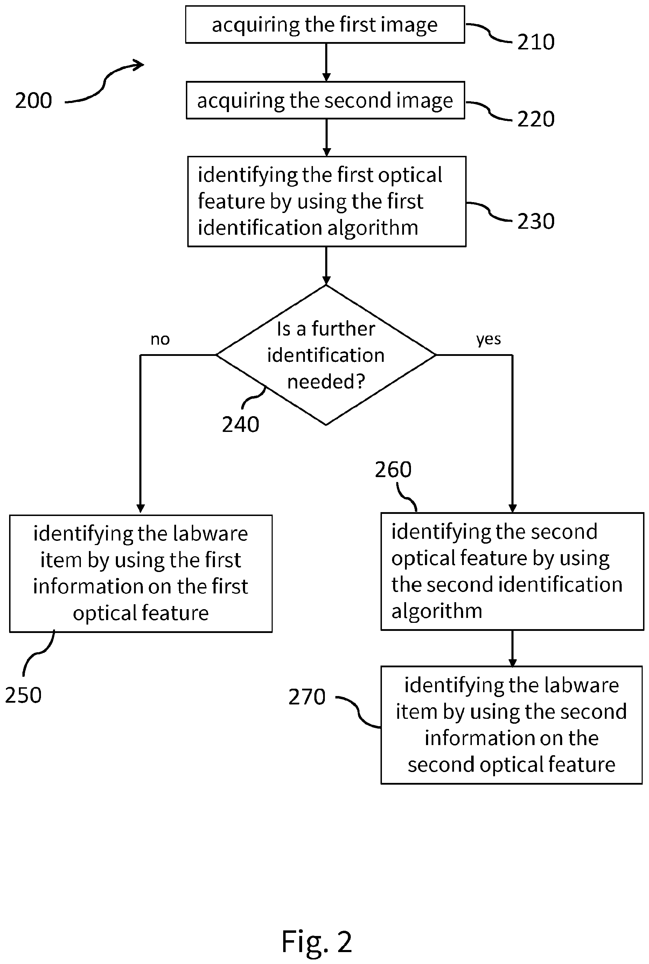

**Fig. 2** is a flow diagram 200 of the operation of a first embodiment of the method according to the present invention. In particular, the first embodiment of the method according to the present invention may be performed by the DPS 100 described above and schematically depicted in **fig. 1****.**

The first embodiment of the method carries out the identification of a 1000 µl tipbox with filter. This identification is carried out by using the first and the second optical feature. The first optical feature is an L-shaped hole pattern 341 comprising four holes and the second optical feature is the color of the 1000 µl tipbox with filter, e.g. the color cyan. For the sake of discussion, it is assumed that the 1000 µl tipbox with filter is the only labware item comprising these two optical features.

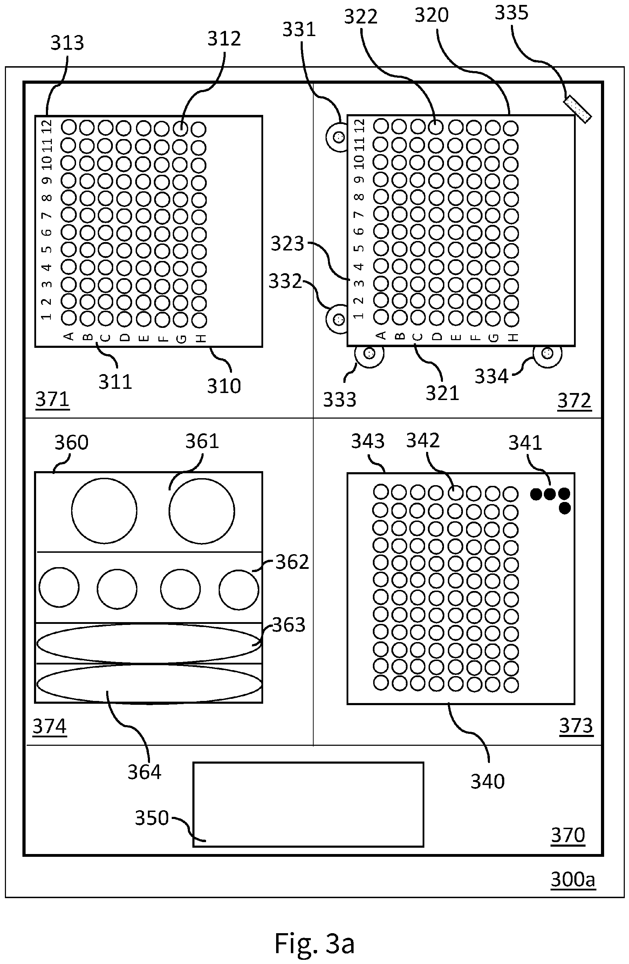

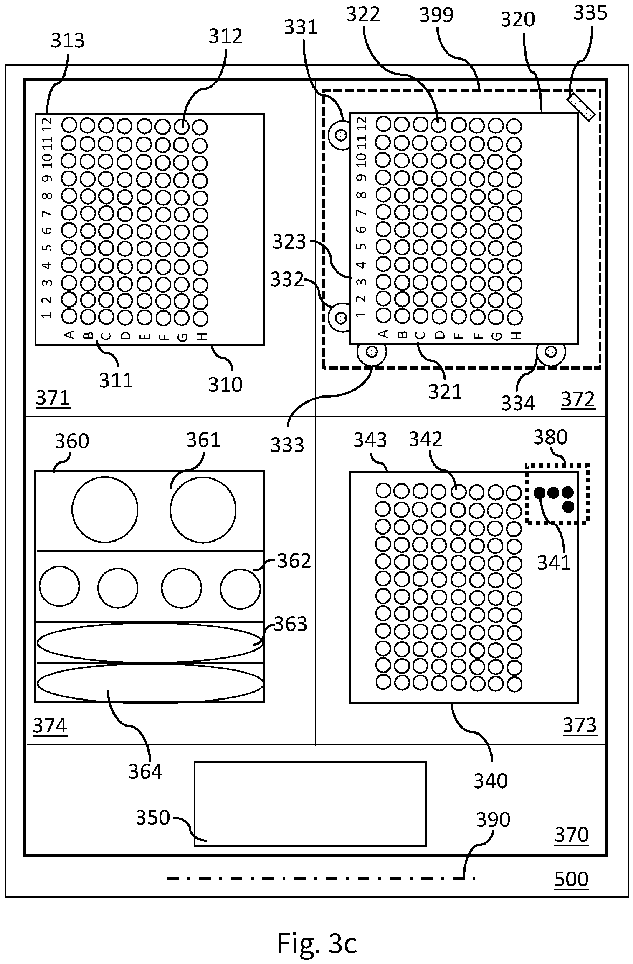

At step 210, the DPS 100 acquires the first image 300a, schematically represented in **fig. 3a** and **fig. 3c****.** The first image 300a is acquired by using the first camera 150 and, hence, is a greyscale image. As shown in **fig. 3a****,** the first image 300a displays a top view of the work deck 370 of the DPS 100. The work deck 370 comprises a waste container 350 and four regions 371-374 for positioning labware items.

A first labware item 310, which is a 96 MTP Plate, is positioned on the first region 371. The first labware item 310 comprises ninety-six wells 312 distributed in twelve columns and eight rows. The first labware item 310 comprises two sets of alphanumeric characters 311, 313. The first set of alphanumeric characters 321 forms a column depicting the letters A, B, C, D, E, F, G and H. The second set of alphanumeric characters 323 forms a row depicting the numbers from one to twelve. The wells 312 of the first labware item 310 contain a first compound.

A second 320 labware item and a third labware item are positioned on the second region 372. The second labware item 320 is a 96 MTP Plate comprising 96 wells 322 distributed in 12 columns and 8 rows. The second labware item 320 comprises two sets of alphanumeric characters 321, 323. The first set of alphanumeric characters 321 forms a column depicting the letters A, B, C, D, E, F, G and H. The second set of alphanumeric characters 323 forms a row depicting the numbers from one to twelve. The wells 322 of the second labware item 320 contain a second compound. The third labware item is a 55 mm height adapter, onto which the second labware 320 item is arranged. In particular, **fig. 3a** depicts the five pins 331 - 335 of the height adapter.

A fourth labware item 340, which is a 1000 µl tipbox with filter, is positioned on the third region 373. The fourth labware item 340 comprises ninety-six tips 342 distributed in twelve columns and eight rows and an L-shaped hole pattern 341 comprising four holes. A fifth labware item 360, is positioned on the fourth region 374. The fifth labware item 360 is a reservoir rack comprising a 100 ml tube 364, a 30 ml tube 363, a first reservoir rack module 362, and a second reservoir rack module TC 361. The first reservoir rack module 362 comprises four reaction vessels having a diameter of 16 mm and/or the second reservoir rack module 361 comprises two reaction vessels having a diameter of 29 mm. in particular, the first reservoir rack module 362 and/or the second reservoir rack module 361 may be a temperature controlled by means of a thermal module (not shown).

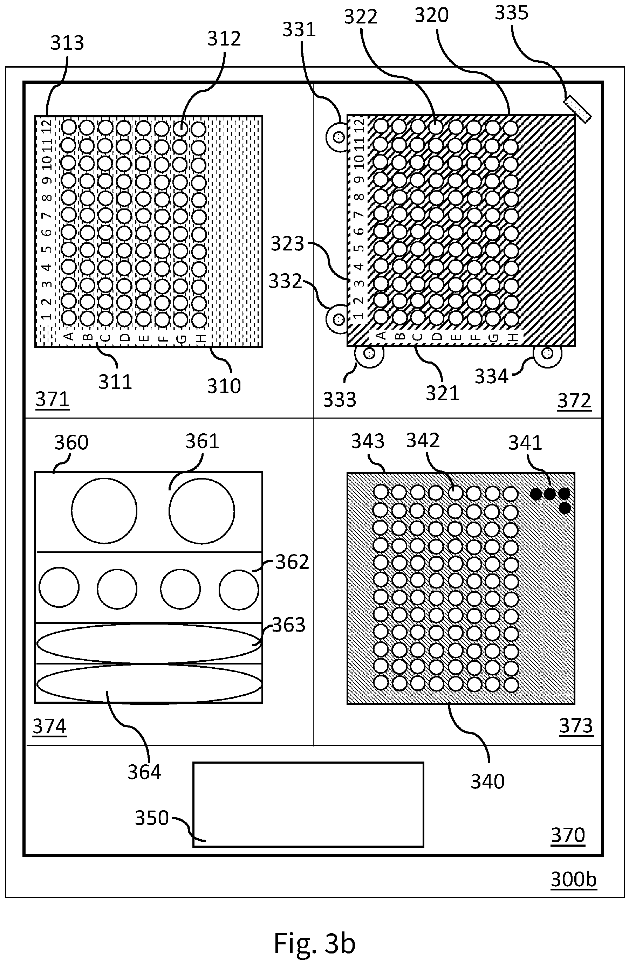

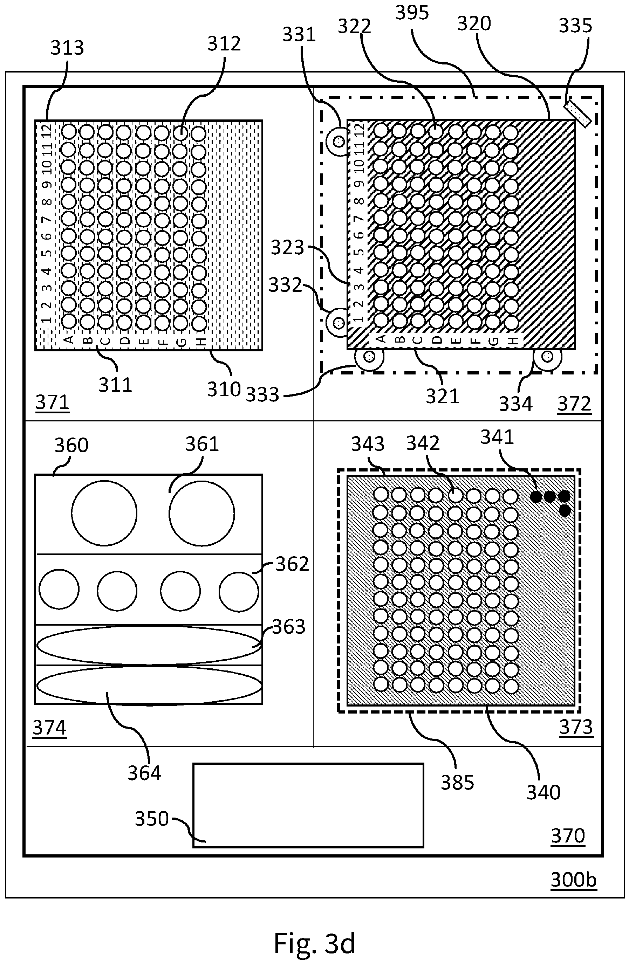

At step 220, the DPS 100 acquires the second image 300b, schematically represented in **fig. 3b** and **fig. 3d****.** The second image 300b is acquired by using the second camera 160 and, hence, is a polychrome image. As shown in **fig. 3b****,** the second image 300a displays a top view of the work deck 370 of the DPS 100, said top view being substantially identical to the one displayed in the first image 300a, cf. **fig. 3a****.** The second image 300b is acquired by using a polychrome camera and, hence, the second image 300b differs from the first one 300a at least in that the former image 300a displays the colors of the labware items. In particular, in **fig. 3b****,** the color of the first 310, the second 320, the third labware item and the fourth 340 labware item are schematically represented by hatched regions. For example, the first labware item 310 is green, the second labware item 320 is yellow, and the fourth labware item 340 is cyan. Both the first and the second labware item are a 96 MTP plate. However, they contain different compounds and, hence, are distinguished from one another by their color.

The first image 300a and/or the second image 300b may be stored in the primary and/or secondary memory of the DPS 100 and may be accessed by the processing element 110 to identify the first optical feature and/or the second optical feature, respectively.

At step 230, the DPS 100 identifies the first optical feature, i.e. the L-shaped hole pattern 341, in the first image 300a by using the first identification algorithm. In particular, the first identification algorithm processes first input data that comprise the location and the intensity of the pixels of the first image 300a. The first identification algorithm identifies the first optical feature by checking whether the L-shaped hole pattern 341 comprising four holes is displayed in the first image 300a and by providing an estimate of the location of said hole pattern 341 in the first image 300a. In particular, the first identification algorithm may comprise machine learning algorithm, e.g. an ANN.

The first identification algorithm generates the first identification data as output, said data comprising information on the first optical feature. The information on the first optical feature specifies that, with a first specified probability, an L-shaped hole pattern 341 is displayed at a specified location in the first image 300a and with a specified orientation with respect to a given direction. In **fig. 3c****,** the specified location is marked by the dotted box 380 and the given direction is denoted by the dot-dashed line 390. In particular, as shown in **fig. 3c****,** the specified orientation of the L-shaped hole pattern 341 is such that the longer arm of the L formed by the hole pattern 341, i.e. the arm comprising three holes, is substantially parallel to the given direction 390.

At step 240, it is established whether, according to the information encoded in the first identification data, a further identification is needed. This may be achieved by comparing the first specified probability with a given threshold. The given threshold may, for instance, be comprised between 0.8 or 0.9. Hence, in this embodiment, the first specified probability encodes the information indicative of whether at least a further identification is needed.

If the probability is larger than the given threshold, the DPS 100 carries out the first labware identification algorithm which processes input data and generates the first labware identification data (step 250). For example, in this case, the input data of the first labware identification algorithm comprises information specifying that, with the first specified probability, the L-shaped hole pattern 341 is displayed at the specified location in the first image 300a and with a specified orientation with respect to the given direction 390.

The first labware identification algorithm comprises instructions that, when executed by the processing element 110, cause the processing element to access a lookup table to assess what is the labware item associated with the first optical feature, i.e. the labware item comprising an L-shaped hole pattern 341 with four holes. The lookup table associates the first optical feature with the 1000 µl tipbox with filter, thus the first labware identification data comprises information specifying that the identified labware item is a 1000 µl tipbox with filter 340.

The first labware identification algorithm comprises instructions that, when executed by the processing element 110, cause the processing element to estimate the location of the 1000 µl tipbox with filter 340 on the work deck 370. Said estimate may be obtained by using information indicative of the shape and the features of the identified labware item, and of the specified location and orientation of the L-shaped hole pattern 341 in the first image 300a. Hence, the first labware identification data comprises information specifying that the identified labware item is located in the fourth region 374 of the work deck 370.

In particular, the information indicative of the shape and the features of the identified labware item comprises information specifying that the identified labware item as displayed in the first image 300a has a rectangular shape with specified dimensions and ninety-six wells. Moreover, the 1000 µl tipbox with filter 340 comprises a L-shaped hole pattern 341 with specified dimensions. The hole pattern 341 of the 1000 µl tipbox with filter 340 is oriented in such a way that the longer arm of the "L" formed by the hole pattern is substantially parallel to the shorter side 343 of the 1000 µl tipbox with filter 340, cf. **figs. 3a** or **3c****.**

The first labware identification algorithm may use the extrinsic calibration parameters, the intrinsic calibration parameters of the first camera, and the dimensions of a 1000 µl tipbox with filter 340 to estimate the size of the region of the first image 300a, that displays the 1000 µl tipbox with filter 340.

If, instead, the probability is lower than the given threshold, the DPS 100 identifies the second optical feature in the second image 300b by using the second identification algorithm (step 260). In particular, this embodiment may comprise the step of selecting the second identification algorithm among the second pool of identification algorithms. The selection of the second identification algorithm depends at least on the information encoded in the first identification data, i.e. on the information specifying that the first optical feature is, with the first specified probability, an L-shaped hole pattern 341. As the only labware item comprising an L-shaped hole pattern 341 is a 1000 µl tipbox with filter 340, the second identification algorithm selected by the DPS 100 assesses whether the second image 300b comprises regions with pixels having intensity corresponding to the color cyan.

More specifically, the second identification algorithm processes second input data that comprise the location and the intensity of the pixels of the second image 300b. The second identification algorithm comprises instructions which, when executed by the processing element 110, causes the DPS 100 to assesses whether the second image 300b comprises regions with pixels having intensity corresponding to the color cyan and the location of said regions. In particular, said assessment is carried out by locating the pixels with intensity falling within a range of intensities that corresponds with the color cyan. For example, if the intensity is expressed in terms of the RGB color model, the range of intensities may comprise the intensities having first RGB value comprised between 0 and 100, second RGB value comprised between 200 and 255 and second RGB value comprised between 200 and 255. Alternatively, if the intensity is expressed in terms of the RGB color model, the intensity range associated to the color cyan may be expressed by using the HSL or HSV representation.

The second identification algorithm generates the second identification data as output, said data comprising information on the second optical feature. The information on the second optical feature specifies that, with a second specified probability, the intensity of the pixels of a rectangular region of the second image 300b corresponds to the color cyan, said rectangular region being located at a specified location of the second image 300b. In **fig. 3d****,** the rectangular region of the second image 300b is marked by a dotted box 385.

The second input data may further comprise information indicative of the specified location of the L-shaped hole pattern 341 in the first image 300a and the second identification algorithm may detect the rectangular region 385 by using said information. For instance, the second identification algorithm may use the intrinsic and extrinsic parameters of the first 150 and the second 160 camera to estimate, given the specified location of the hole pattern 341 in the first image 300a, the corresponding location of said pattern 341 in the second image 300b. The rectangular region 385 may thus be detected by analyzing the intensity of the pixels located in a region comprising the corresponding location of the L-shaped hole pattern 341 in the second image 300b.

At step 270, the labware item is identified by using the first information on the first optical feature 341 and the information on the second optical feature. More specifically, the DPS 100 carries out the second labware identification algorithm which processes input data and generates the second labware identification data. For example, the second labware identification algorithm is a decision tree and the input features are the first and the second specified probabilities, the size, specified location, and specified orientation of the optical feature 341 in the first image 300a, and the size, specified location, and orientation of the rectangular region in the second image 300b. In this case, the second labware identification algorithm assesses, given the input features, whether the labware item is a 1000 µl tipbox with filter 340 and, if this is the case, its location on the work deck 370. Thus, in this embodiment, the second labware identification data may specify that the labware item is a 1000 µl tipbox with filter 340 located in the fourth region 374 of the work deck 370.

The first identification data, the second identification data, the first labware identification data and/or the second labware identification data may be stored in the primary memory and/or secondary memory of the DPS 100.

A further embodiment of the method according to the present invention may comprise the steps 210 to 270 of the first embodiment described above. This former embodiment differs from the latter one in the order, according to which the steps 210 to 270 are carried out. in particular, in the further embodiment, the step 220 of acquiring the second image 330b may be carried either before the step 210 of acquiring the first image 330a or after the step 230 of identifying the first optical feature 341 by using the first identification algorithm.

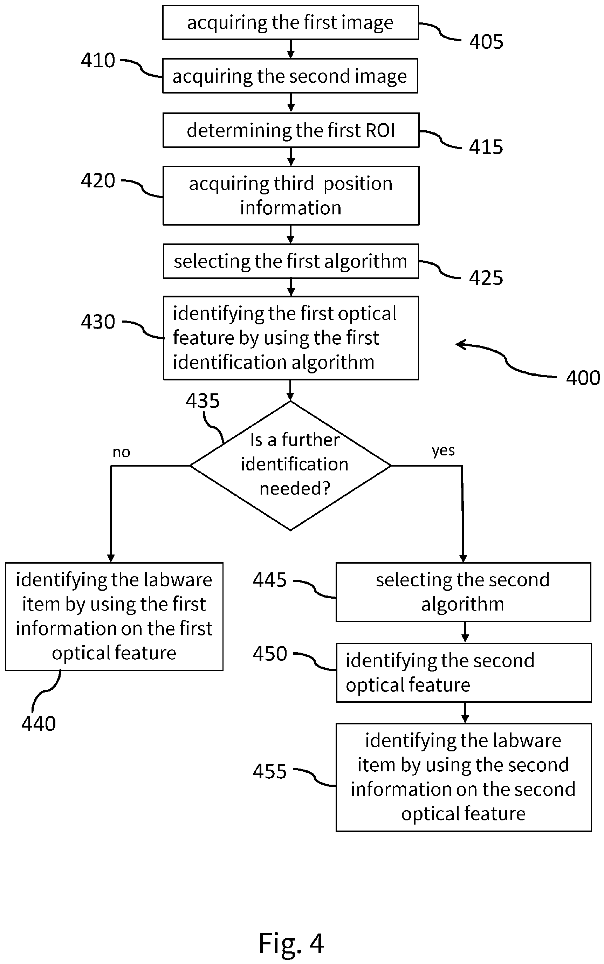

**Fig. 4** is a flow diagram 400 of the operation of a second embodiment of the method according to the present invention which, for instance, may be performed by the DPS 100 described above and schematically depicted in **fig. 1****.** The second embodiment of the method carries out the identification of the labware item located on the second region of the work deck of the DPS 100.

At step 405, the DPS 100 acquires the first image 300a by using the first camera 150. The first image 300a is a greyscale image and is substantially identical to the homonymous image acquired by carrying out the first embodiment of the method of the present invention. Hence, the first image 300a acquired by carrying out the step 405 is schematically represented in **fig. 3a** and **fig. 3c****.** In particular, the first image 300a displays a top view of the work deck 370 of the DPS 100. The work deck 370 comprises a waste container 350 and four regions 371-374 for positioning labware items.

At step 410, the DPS 100 acquires the second image 300b by using the second camera 160. The second image 300b is a polychrome image and is substantially identical to the homonymous image acquired by carrying out the first embodiment of the method of the present invention. Hence, the first image 300a acquired by carrying out the step 410 is schematically represented in **fig. 3b** and **fig. 3d****.**

At step 415, the DPS 100 determines the first ROI in the first image 300a by using first position information. Said information specifies that the labware item to be identified is the one positioned on the second region 372 of the work deck 370. The first ROI is a rectangular region of the first image 300a displaying the second region 372 of the work deck 370.

The first ROI is obtained by using the first ROI determining algorithm by processing the pixels of the first image 300a and the first position data encoding the first position information. For example, the first ROI determining algorithm uses the intrinsic and extrinsic calibration parameters associated with the first camera 150 to detects the rectangular region of the first image 300a that displays the second region 372 of the work deck 370.

At step 420, the DPS 100 acquires the third position information on the position of the to-be-identified labware item with respect to the work deck 370. Said information is generated by using at the position determining algorithm. Said algorithm processes position determining input data, which comprise the location and the intensity of the pixels comprised in the first ROI.

The position determining algorithm comprises an ANN that processes the position determining input data to determine whether the first ROI displays a height adapter by detecting at least some of the pins of said height adapter. As shown in **fig. 3a** or **fig. 3c****,** the first ROI displays the pins 331-335 of a 55mm height adapter. Hence, the ANN detects said pins 331-335 and provides an estimate of their location in the first ROI and an estimate of the height of the height adapter. In particular, said height is estimated to be equal to 55 mm.

The position determining algorithm comprises instructions which, when executed by the processing element 110, cause the DPS 100 to acquire third position information by estimating the location of the labware item to be identified. Said estimate is carried out by using the locations of the pins 331 to 335 in the first ROI. In particular, the third position information specifies that the labware item to be identified is comprised in a third ROI of the first image 330a. In **fig. 3c****,** the third ROI is marked by the dashed square 399. The third position information further specifies the estimated height of the height adapter displayed in the first ROI.

At step 425, the first identification algorithm is selected among a first pool of identification algorithms. This selection depends on the location of the first ROI in the first image 300a and on the third position information, in particular on the estimated height of the height adapter displayed in the first ROI. For the sake of discussion, it is assumed that only two labware items may be arranged on a height adapter of the estimated height, namely a 96 MTP Plate or a 1000 µl tipbox with filter.

Accordingly, the selected identification algorithm is a confidence-weighted classifier performing a multiclass classification to detect an L-shaped hole pattern comprising four holes and/or two sets of alphanumeric characters, the first one forming a column depicting the letters from A to H, the second one forming a row depicting the numbers from one to twelve. Moreover, this algorithm may be optimized to carry out a multiclass classification on the scene displayed in the first ROI, e.g. to classify the objects located in the second region 372 of the work deck. In particular, when identifying the second optical features, the first identification algorithm takes into account the perspective of the image, which depends, inter alia, on the position of the second region 372 with respect to the first camera. The first identification algorithm may also take into account the illumination conditions, that, typically, characterize the second region 372 of the work deck 370.

At step 430, the DPS 100 identifies the first optical feature by using the first identification algorithm. In particular, the first identification algorithm processes first input data that comprise the location and the intensity of the pixels of the third ROI 399. Said algorithm identifies the first optical feature by checking whether the third ROI 399 displays an L-shaped hole pattern comprising four holes or two sets of alphanumeric characters, the first one forming a column depicting the letters from A to H, the second one forming a row depicting the numbers from one to twelve.

The first identification algorithm generates the first identification data as output, which comprise information on the first optical feature. In this case, the information on the first optical feature may specify that, with a third specified probability, the third ROI 399 displays two sets of alphanumeric characters, the first set 321 forming a column depicting the letters from A to H and the second set 323 forming a row depicting the numbers from one to twelve. The information on the first optical feature may further specify that, with a fourth specified probability, the third ROI 399 does not display an L-shaped hole pattern comprising four holes. Furthermore, the first information on the first optical feature specifies that, with a fifth specified probability, the first optical feature consists of two sets of alphanumeric characters, the first set 321 forming a column depicting the letters from A to H and the second set 323 forming a row depicting the numbers from one to twelve.

In particular, the fifth specified probability is equal to 0.98 and indicates that the requirements on the accuracy of the identification of the first optical feature are met. In this case, the first information on the first optical feature is reliable but inconclusive. In particular, said information allows for concluding that the labware item 320 is a 96 MTP plate, i.e. that the said item belongs to the class of 96 MTP plates. The first information on the first optical feature, however, is not sufficient to identify which compound is contained in said labware item. In order to identify the compound, the second optical feature, i.e. the color, of the labware item 321 has to be identified.

Hence, in this embodiment, the first information on the first optical feature specifies that at least a further identification is needed. Hence, at step 435, it is established that, according to the first information on the first optical feature, a further identification is needed and, thus steps 445, 450 and 455 have to be carried out.

At step 445, the DPS 100 selects the second identification algorithm among the second pool of identification algorithms. The selection of the second identification algorithm depends at least on the first information on the first optical feature. As the only class of labware item comprising the first optical feature is the class of 96 MTP plates, the second identification algorithm selected by the DPS 100 identifies the average color of a 96 MTP plate displayed in the third ROI 399.

At step 450, the DPS 100 identifies the second optical feature in the image 300b by using the second identification algorithm. The second identification algorithm processes second input data that comprise the location and the intensity of the pixels of the second image 300b and information indicative of the location of the third ROI 399. For instance, the second identification algorithm may use the intrinsic and extrinsic parameters of the first 150 and second 160 camera to estimate, given the specified location of the third ROI 530 in the first image 300a, a corresponding fourth ROI in the second image 300b. In **fig. 3d****,** the fourth ROI is marked by a dot-dashed box 395 and displays the 96 MTP Plate 320.

The second identification algorithm comprises instructions which, when executed by the processing element 110, causes the DPS 100 to compute the average intensity of the pixels of the fourth ROI 395 and to identify the color of the labware item. In particular, the color identification is carried out by assessing whether the average intensity falls within the intensity range associated with the color yellow or within the range associated with the color green. For example, if the intensity is expressed in terms of the RGB color model, the intensity range associated with the color green comprises the intensities having first RGB value comprised between 0 and 100, second RGB value comprised between 200 and 255 and third RGB value comprised between 0 and 100. The intensity range associated with the color yellow may comprise the intensities having first RGB value comprised between 230 and 255, second RGB value comprised between 230 and 255 and third RGB value comprised between 0 and 100. If the intensity is expressed in terms of the RGB color model, the intensity range associated to the color green and/or the intensity range associated to the color yellow may also be expressed by using the HSV or the HSL representation.

Alternatively, or in conjunction with the above, the second identification algorithm may comprise an ANN and/or a SVM which process the pixels of the fourth ROI 395 to identify the color of the labware item.

The second identification algorithm generates the second identification data as output, which comprise information on the second optical feature. As the fourth ROI 395 displays a yellow 96 MTP Plate 320, the information on the second optical feature specifies that, with a sixth specified probability, the color of the labware item displayed in the fourth ROI 395 is the color yellow.

At step 4550, the labware item is identified by using the first information on the first optical feature 321, 323 and the second optical feature. More specifically, the DPS 100 carries out the second labware identification algorithm which processes input data and generates the second labware identification data. For example, in this case, the input data of the second labware identification algorithm comprises information encoded in the first information on the first optical feature 341 and the information on the second optical feature.

In particular, the second labware identification algorithm is a decision tree. In this embodiment, the second labware identification data may specify that the labware item located in the second region 372 of the work deck 370 is a yellow 96 MTP plate 320 arranged on a 55mm height adapter 331 to 335 and that the well of the 96 MTP plate 320 contains the second compound.

If, at step 430, the first identification algorithm generated the first identification data specified that the first optical feature was an L-shaped hole pattern, the step 440 would have been carried out instead of the steps 445, 450 and 455. In this case, the labware item would have been identified to be a 1000 µl tipbox with filter, which is the only labware item comprising an L-shaped hole pattern.

Wherever not already described explicitly, individual embodiments, or their individual aspects and features, described in relation to the drawings can be combined or exchanged with one another without limiting or widening the scope of the described invention, whenever such a combination or exchange is meaningful and in the sense of this invention. Advantages which are described with respect to a particular embodiment of present invention or with respect to a particular figure are, wherever applicable, also advantages of other embodiments of the present invention.

## Claims

1. Computer implemented method for identifying a labware item (310, 320, 330, 340, 350), the labware item (310, 320, 330, 340, 350) comprising a first optical feature and a second optical feature, wherein the method comprises the steps of:
- acquiring (210) of a first image (300a) of the labware item (310, 320, 330, 340, 350) with at least a first optical recording device, the first image (300a) displaying at least a portion of the first optical feature;
- acquiring (220) a second image (300b) of the labware item (310, 320, 330, 340, 350) with at least a second optical recording device, the second image (300b) displaying at least a portion of the second optical feature; and
- identifying (230) the first optical feature in the first image (300a) by using at least a first identification algorithm thereby obtaining first identification data, the first identification data encoding first information on the first optical feature and information indicative of whether at least a further identification is needed, wherein if, according to the information encoded in the first identification data, the at least further identification is not needed, the method further comprises the step of:
- identifying (250) the labware item (310, 320, 330, 340, 350) by using at least the first information on the first optical feature,
and wherein if, according to the information encoded in the first identification data, the at least further identification is needed, the method further comprises the steps of:
- identifying (260) the second optical feature in the second image (300b) by using at least a second identification algorithm thereby obtaining second identification data, the second identification data encoding information on the second optical feature; and
- identifying (270) the labware item (310, 320, 330, 340, 350) by using at least the information on the second optical feature.

2. Method according to claim 1,
wherein the method comprises the step of:
- determining a first region of interest in the first image (300a) by using first position information about the position of the labware with respect to a work deck,
and the step of identifying the first optical feature in the first image (300a) by using the first identification algorithm is carried out by using the first region of interest, and/or wherein the method comprises the step of:
- determining a second region of interest in the second image (300b) by using second position information on the position of the labware with respect to the work deck,
and the step of identifying the second optical feature in the second image (300b) by using the second identification algorithm is carried out by using the second region of interest.

3. Method according to either claim 1 or 2, further comprising the step of:
- acquiring third position information on the position of the labware item (310, 320, 330, 340, 350) with respect to the work deck by using at least a position determining algorithm,
wherein
the first identification algorithm processes first input data, the first input data depending on the third position information, and/or the method comprises the step of:
- selecting the first identification algorithm among a first pool of identification algorithms,
wherein the step of selecting the first identification algorithm depends at least on the third position information.

4. Method according to any one of the preceding claims, wherein the first optical recording device is a first camera, wherein the first identification algorithm depends at least on a first set of intrinsic calibration parameters associated to the first camera, and/or at least on a first set of extrinsic calibration parameters associated to the first camera.

5. Method according to any one of the preceding claims, wherein the second optical recording device is a second camera, wherein the second identification algorithm depends at least on a second set of intrinsic calibration parameters associated to the second camera, and/or at least on a second set of extrinsic calibration parameters associated to the second camera.

6. Method according to any one of the preceding claims, wherein if, according to the information encoded in the first identification data, at least a further identification is needed, the method further comprises the step of:
- selecting the second identification algorithm among a second pool of identification algorithms,
wherein the step of selecting the second identification algorithm depends at least on the information encoded in the first identification data.

7. Method according to any one of the preceding claims wherein the second algorithm processes second input data, the second input data encoding the first information on the first optical feature.

8. Method according to any one of the preceding claims, wherein the second identification data encodes information indicative of whether at least a further identification is needed,
wherein if, according to the information encoded in the second identification data, at least a further identification is needed, the method further comprises the step of:
- identifying the first optical feature in the first image (300a) by using at least a third identification algorithm thereby obtaining third identification data, the third identification data encoding second information on the first optical feature,
and wherein if, according to the information encoded in the second identification data, at least a further identification is needed, the step of identifying the labware item (310, 320, 330, 340, 350) by using at least the information on the second optical feature is performed by using the second information on the first optical feature.

9. Method according to claim 8, wherein the third algorithm processes third input data, the third input data encoding the first information on the first optical feature and/or the information on the second optical feature.

10. Method according to any one of the preceding claims,
wherein the first optical feature and/or the second optical feature comprise an indicium, an ideogram, a pictogram, a set of alphanumeric characters, a texture pattern, a hole pattern and/or a color; and/or
wherein the labware item (310, 320, 330, 340, 350) comprises a plate, a tip, a tube, a reservoir, a tip box, a height adapter, a reservoir rack and/or a tube rack.

11. Method according to any one of the preceding claims, wherein if, according to the information encoded in the first identification data, at least a further identification is needed, the step of identifying the labware item (310, 320, 330, 340, 350) by using at least the information on the second optical feature is performed by using the first information on the first optical feature.

12. A data processing system (100) comprising a first optical recording device, a second optical recording device, and processing means configured to perform the method according to any one of the claims 1 to 11.

13. An automated laboratory system comprising a first optical recording device (150), a second optical recording device (160), processing means configured to perform the method according to any one of the claims 1 to 11, and a work deck for positioning a labware item (310, 320, 330, 340, 350).

14. A computer program product comprising instructions which, when the program is executed by a system according to claim 12 or 13, cause said system to carry out the method according to any one of the claims 1 to 11.

15. A computer-readable storage medium comprising instructions which, when executed by a system according to claims 12 or 13, cause said system to carry out the method according to any one of the claims 1 to 11.
